# EUROPÄISCHE PATENTSCHRIFT

(11) **EP 3 371 550 B1**
(45) Veröffentlichungstag und Bekanntmachung des Hinweises auf die Patenterteilung: **01.05.2024**
(21) Anmeldenummer: 16810235.8
(22) Anmeldetag: 03.11.2016
(51) Int. Cl.: G01C 21/32, G08G 1/0962, G08G 1/0967, G01C 21/00

(54) **VERFAHREN UND SYSTEM ZUM AUSTAUSCHEN VON KARTENDATEN IN ABHÄNGIGKEIT EINES GÜTEMASSES**
METHOD AND SYSTEM FOR EXCHANGING MAP DATA ACCORDING TO A QUALITY MEASUREMENT
PROCÉDÉ ET SYSTÈME D'ÉCHANGE DE DONNÉES CARTOGRAPHIQUES EN FONCTION D'UNE MESURE DE QUALITÉ

(30) Priorität: 05.11.2015 DE 102015221748; 04.04.2016 DE 102016205543
(43) Veröffentlichungstag der Anmeldung: 12.09.2018
(73) Patentinhaber: Continental Automotive Technologies GmbH, 30175 Hannover (DE)
(72) Erfinder: STÄHLIN, Ulrich, 65760 Eschborn (DE)
(74) Vertreter: Continental Corporation
(86) Internationale Anmeldenummer: PCT/DE2016/200496
(87) Internationale Veröffentlichungsnummer: WO 2017/076409

(56) Entgegenhaltungen:
- US-A1- 2011 087 433

## Beschreibung

Die Erfindung betrifft ein Verfahren zum Austauschen von digitalen Kartendaten zwischen einem ersten und einem zweiten Fahrzeug sowie ein System zum Erstellen einer digitalen Karte für ein Fahrzeug.

Durch die Zunahme von Fahrerassistenzsystemen in Fahrzeugen mit höheren Automatisierungsgraden nimmt die Bedeutung digitaler Karten zu, da diese für die Berechnung und Durchführung von Fahrmanövern durch die Fahrerassistenzsysteme herangezogen werden können. Durch das Zusammenspiel der Fahrerassistenzsysteme mit Fahrzeug-zu-X Kommunikation wird die Informationsbasis für Entscheidungen der Fahrerassistenzsysteme nochmals verbessert. Nachteilig bleibt aber der Umstand, dass komplexe Strukturen der Verkehrsinfrastruktur, wie z. B. Straßenstrukturen, Straßenverläufe, Verläufe von Spuren über mehrere Straßen hinweg häufig nicht eindeutig interpretierbar sind. Auch kann es an solchen Orten vorkommen, dass Fahrsituationen entstehen, bei denen der Informationsgehalt von Fahrzeug-zu-X Nachrichten nicht ausreicht, um eine eindeutige Entscheidung für ein Fahrmanöver zu treffen.

Aus der US 2011/0087433 A1 geht ein Verfahren eines Kollisionswarnsystems in einem Kraftfahrzeug hervor, welches aufweist: Kartieren eines Straßenabschnitts in der Umgebung des Kraftfahrzeugs, wobei das Kartieren umfasst:
Empfangen einer Fahrzeugfahrthistorieninformation für den Straßenabschnitt von einem Sender in der Umgebung des Stra-ßenabschnitts; und
Evaluieren von potentiellen Wegen für den Straßenabschnitt basierend auf der Fahrzeugfahrthistorieninformation; Bestimmen eines ersten Wegs für das Kraftfahrzeug zum Befahren des Straßenabschnitts basierend auf der empfangenen Fahrzeugfahrthistorieninformation;
Empfangen von einem Zielfahrzeug gesendeter Fahrzeugfahrthistorieninformation;
Bestimmen eines zweiten Wegs für das Zielfahrzeug zum Befahren des Straßenabschnitts basierend auf der empfangenen Fahrzeugfahrthistorieninformation; und
Berechnen einer Kollisionsgefahr für das Kraftfahrzeug mit dem Zielfahrzeug einschließlich dem Vergleich der ersten und zweiten Wege.

Es ist daher Aufgabe der Erfindung ein System oder ein Verfahren aufzuzeigen, mittels dem der Informationsgehalt digitaler Kartendaten eines Fahrzeugs verbessert werden kann.

Die Aufgabe wird gelöst mittels eines Verfahrens gemäß den Merkmalen des Anspruchs 1. Weitere vorteilhafte Ausführungsformen sind Gegenstand der abhängigen Ansprüche, die durch Bezugnahme ausdrücklich zum Gegenstand der Beschreibung gemacht werden.

Die Erfindung beruht auf der Erkenntnis, dass Fahrzeuge mit selbstlernenden Karten üblicherweise nur für solche Bereiche ausreichend und aktuelle Kartendaten sammeln, die sie auch selbst häufig befahren. Das Sammeln der Kartendaten oder Informationen zu einem Kartenabschnitt kann entweder über das Abfahren einer Strecke und / oder über Informationen aus empfangenen Fahrzeug-zu-X (kurz V2X) Nachrichten erfolgen. Kartendaten zu Gebieten oder Strecken, die zum ersten Mal oder nur sporadisch befahren werden, können daher lückenhaft, unvollständig und / oder veraltet sein. Durch das Austauschen von Kartendaten mit anderen Fahrzeugen, die eine ausreichende Güte bzw. Qualität, d. h. Vollständigkeit, Genauigkeit und Aktualität der Kartendaten, aufweisen, kann die Verbreitung von Kartendaten mit einem hohen Mehr- oder Nutzwert bei möglichst effizienter Nutzung vorhandener Kommunikationsbandbreite und Datenverarbeitungskapazitäten erfolgen. Vorzugsweise wird eine Aufforderungsnachricht lediglich dann versandt, wenn tatsächlich ein Bedarf nach weiteren Kartendaten vorhanden ist.

Es sei angemerkt, dass das Verfahren mit mehr als zwei Fahrzeugen ausführbar ist und nicht auf zwei Fahrzeuge beschränkt ist.

Des Weiteren sei angemerkt, dass das erfindungsgemäße Verfahren prinzipiell mit einem beliebigen Kommunikationsteilnehmer denkbar ist, der Kartendaten vorhält und die Bewertung der Kartendaten vornehmen kann. Insbesondere ist es denkbar das Verfahren auch zwischen einem Fahrzeug und einem nicht mobilen Kommunikationspartner durchzuführen, bspw. einer sog. Road Side Unit bzw. virtuellen Verkehrsbeeinflussungseinrichtung. Diese bräuchten dann nicht zwangsläufig eine Positionseinheit, wobei in diesem Fall jedoch insbesondere eine Kommunikationseinheit und eine Karteneinheit vorgesehen wären.

Vorzugsweise wird eine Kommunikation zwischen den Fahrzeugen über eine Fahrzeug-zu-X bzw. V2X Kommunikation durchgeführt. Das aus dem Stand der Technik bekannte IEEE 802.11p Protokoll eignet sich gut dafür. Andere Kommunikationswege werden aber nicht ausgeschlossen.

Das Gütemaß stellt eine Kenngröße zur Bewertung der Kartendaten dar, sei es der eigenen oder der empfangenen Kartendaten. Das Ermitteln des Gütemaßes kann auf Basis unterschiedlicher Kriterien oder Metriken erfolgen, wie hiernach noch beschrieben. Das Gütemaß kann dabei für einzelne Kartendatentypen innerhalb eines Kartenabschnitts ermittelt und / oder für die Gesamtheit aller Kartendaten eines Kartenabschnitts ermittelt werden. Letzeres kann sich auch aus der Summe einzelner Gütemaße ermittelt werden. Unter einen Datentyp ist eine bestimmte Sorte oder Gruppe von Informationen zu verstehen, z. B. Daten über Fahrspuren, Baustellen, Vorfahrtsregeln, etc.

Eine Aufforderungsnachricht enthält die Aufforderung an den Empfänger, dass Kartendaten hilfreich wären. Die Aufforderungsnachricht kann, muss aber nicht Nutzdaten enthalten. In der einfachsten Form enthält die Aufforderungsnachricht einen Identifikator bzw. ID, bspw. im Header der Nachricht, um die Aufforderungsnachricht als solche zu Erkennen. Denkbar ist es jedoch bspw. eine Position zu der ein Kartenabschnitt gewünscht ist, mit in die Aufforderungsnachricht einzufügen. Diese Option kann dann hilfreich sein, wenn zu einer bestimmten Position Kartendaten ergänzt werden sollen. Andernfalls kann das zweite Fahrzeug entweder anhand seiner eigenen Position oder seiner kürzlich befahrenen Kartenabschnitte bestimmen, zu welchen Kartenabschnitten Kartendaten übermittelt werden.

Entsprechend dem erfindungsgemäßen Verfahren wird die Aufforderungsnachricht lediglich dann versendet, wenn zumindest ein zweites Fahrzeug in der Umgebung ist. Erfindungsgemäß wird daher vor dem Senden einer Aufforderungsnachricht mit einer Aufforderung zum Übermitteln von Kartendaten überprüft, ob zumindest ein zweites Fahrzeug in der Umgebung ist. Die Überprüfung kann dabei beispielsweise auf Basis von empfangenen Nachrichten, z.B. CAM-Nachrichten, und/oder Umfeldsensoren erfolgen. Wird während der Überprüfung festgestellt, dass kein Fahrzeug in der Umgebung ist, wird zweckmäßigerweise auf ein Aussenden einer Aufforderungsnachricht verzichtet. Unter Umgebung wird dabei insbesondere ein räumliches Gebiet verstanden, innerhalb dem das erste Fahrzeug von einem zweiten bzw. weiteren Fahrzeug mittels der Kommunikationseinheit zum Austauschen von Nachrichten zwischen Fahrzeugen Daten empfangen bzw. an dieses senden kann. Die Ausdehnung dieses Gebiets ist somit von vielfältigen Faktoren,

wie beispielsweise Leistungsfähigkeit des verwendeten Transceiver-Moduls oder der Umgebung, beispielsweise Gebäude, abhängig. In vorteilhafter Weise kann somit ein unnötiges Versenden von Aufforderungsnachrichten vermieden und die Bandbreite des Übertragungsmittels geschont werden. Wird während der Überprüfung festgestellt, dass sich ein Fahrzeug in der Umgebung aufhält, wird die Aufforderungsnachricht vorzugsweise ausgesandt.

Das erfindungsgemäße Verfahren wird dadurch weitergebildet, dass zum Erstellen des Gütemaßes berücksichtigt wird, welche Zeitspanne seit dem letzten Befahren des Kartenabschnitts verstrichen ist. Veraltete Kartendaten können auf diese Weise aktualisiert werden.

Das erfindungsgemäße Verfahren wird dadurch weitergebildet, dass zum Erstellen des Gütemaßes berücksichtigt wird, wie oft Fahrten innerhalb des Kartenabschnitts durchgeführt wurden. Die Plausibilität der Kartendaten kann auf diese Weise erhöht werden.

Das erfindungsgemäße Verfahren wird dadurch weitergebildet, dass zum Erstellen des Gütemaßes berücksichtigt wird, von wie vielen anderen Fahrzeugen bereits Nachrichten mit Kartendaten empfangen wurden, die zueinander plausibel oder im Wesentlichen gleich sind. Auf diese Weise können bestimmte Kartendaten mit höherer Sicherheit als plausibel bestätigt werden.

Das erfindungsgemäße Verfahren wird dadurch weitergebildet, dass zum Erstellen des Gütemaßes eine gewichtete Standardabweichung zwischen den empfangenen Kartendaten für diesen bzw. einen jeweiligen Kartenabschnitt berücksichtigt wird. Auf diese Weise kann die Notwendigkeit für weitere Kartendaten zum Plausibilisieren und Präzisieren der vorhandenen Kartendaten ermittelt werden. Je höher die Abweichung der Kartendaten voneinander, desto höher ist der Bedarf nach weiteren Kartendaten.

Es sei angemerkt, dass die vorgenannten Ausführungsformen zum Bestimmen des Gütemaßes miteinander kombinierbar sind und auf Kartendatentypen und / oder auf die Kartendaten eines Kartenabschnitts bezogen sind.

Das erfindungsgemäße Verfahren wird dadurch weitergebildet, dass die Nachricht mit Kartendaten eine MAP Nachricht ist. Bei der MAP Nachricht handelt es sich dabei um eine Nachricht, die nach dem SAE J2735 Standard (letzter Stand Sept 2015) definiert ist. Im Sinne der Erfindung seien aber MAP Nachrichten nicht ausgeschlossen, die nach anderen Standards definiert sind, die beispielsweise zum Zeitpunkt der Anmeldung noch nicht final beschlossen und veröffentlicht wurden aber sich in Bearbeitung befinden. So gibt es vom ETSI / ISO Bestrebungen weitere Standards für MAP Nachrichten zu erarbeiten. Solche MAP Nachrichten sollen von der Erfindung mit umfasst sein. MAP Nachrichten werden üblicherweise nur von festen Infrastruktureinrichtungen sog. Road Side Units, wie z. B. Ampeln, versendet. Das Versenden von MAP Nachrichten mittels Fahrzeugen ist daher ein Novum. Es hat den Vorteil, dass die vordefinierten Strukturen der MAP Nachricht eine Analyse und Verarbeitung der darin enthaltenen Kartendaten vereinfachen.

Die hiernach folgenden Ausführungsformen bestimmen die Art und Weise, wie auf die Aufforderungsnachricht reagiert wird. Diese Optionen können alternativ oder in Kombination zueinander eingesetzt werden. Insbesondere ist es denkbar die Reaktion auf die Aufforderungsnachricht von einer Fahrsituation, den Gegebenheiten innerhalb eines Kartenabschnitts oder den technischen Gegebenheiten abhängig zu machen.

Das erfindungsgemäße Verfahren wird dadurch weitergebildet, dass die Nachricht mit Kartendaten alle im zweiten Fahrzeug vorhandenen Kartendaten zu einem Kartenabschnitt enthält. Diese Ausführungsform ist dann besonders vorteilhaft, wenn ausreichend Kommunikationsbandbreite vorhanden ist, aber keine gesonderte Analyse der von anderen Fahrzeugen oder Kommunikationsteilnehmer versandten bzw. übermittelten Kartendaten erfolgen soll.

Das erfindungsgemäße Verfahren wird dadurch weitergebildet, dass die Nachricht mit Kartendaten nur Kartendaten oder Kartendatentypen enthält, für die das zweite Fahrzeug ein Gütemaß oberhalb des Schwellenwertes ermittelt hat. Auf diese Weise wird sichergestellt, dass nur Karten mit einer höheren Qualität versandt werden.

Das erfindungsgemäße Verfahren wird dadurch weitergebildet, dass das zweite Fahrzeug vor Versenden einer Nachricht mit Kartendaten überprüft, ob bereits von einem anderen Fahrzeug eine vergleichbare Nachricht geschickt wurde.

Das erfindungsgemäße Verfahren wird dadurch weitergebildet, dass das zweite Fahrzeug eine eigene Nachricht mit Kartendaten aussendet. Der Umstand, dass bereits auf die Aufforderungsnachricht reagiert wurde, wird ignoriert. Auf diese Weise wird die Redundanz an verfügbaren Kartendaten erhöht.

Das erfindungsgemäße Verfahren wird dadurch weitergebildet, dass das zweite Fahrzeug eine Nachricht mit Kartendaten aussendet, die in den bereits von anderen Fahrzeugen ausgesendeten Kartendaten nicht enthalten sind. Hierzu bedarf es einer Analyse der bereits ausgesendeten Kartendaten. Es werden nur solche Kartendaten versendet bzw. übermittelt, die dem ersten Fahrzeug noch nicht bekannt sind.

Das erfindungsgemäße Verfahren wird dadurch weitergebildet, dass das zweite Fahrzeug eine Nachricht mit Kartendaten aussendet, die sich von den bereits von anderen Fahrzeugen ausgesendeten Kartendaten unterscheiden. Unterscheiden ist hier dabei als eine Abweichung zwischen den Kartendaten zu verstehen.

Das erfindungsgemäße Verfahren wird dadurch weitergebildet, dass das zweite Fahrzeug keine Nachricht mit Kartendaten versendet. Es wird darauf vertraut, dass die bereits versandten bzw. übermittelten Kartendaten ausreichend sind. Hierzu kann beispielsweise eine Analyse der bereits versandten Kartendaten erfolgen und bei Übereinstimmung mit den eigenen Daten auf das Versenden verzichtet werden.

Das erfindungsgemäße Verfahren wird dadurch weitergebildet, dass das Versenden einer Aufforderungsnachricht ausgesetzt wird, wenn die Kommunikationsbandbreite der Kommunikationseinheit eine vordefinierte Auslastungsgrenze überschritten hat.

Das erfindungsgemäße Verfahren wird dadurch weitergebildet, dass eine Nachricht mit Kartendaten nicht versendet wird, wenn die Kommunikationsbandbreite der Kommunikationseinheit eine vordefinierte Auslastungsgrenze überschritten hat.

Die Aufgabe wird ferner gelöst gemäß einem zweiten Aspekt der Erfindung mittels eines Systems nach Anspruch 17.

Erfindungsgemäße wird ein System zum Erstellen einer digitalen Karte für ein Fahrzeug vorgeschlagen, aufweisend
- eine Kommunikationseinheit zum Austauschen von Nachrichten zwischen Fahrzeugen,
- eine Positionseinheit zum Erfassen der Eigenposition des Fahrzeugs,
- eine Karteneinheit zum Speichern und Bearbeiten einer digitalen Karte,
- eine Bewertungseinheit zum Erstellen eines Gütemaßes zu einem Kartenabschnitt der digitalen Karte,
   wobei das System ausgestaltet ist
- ein Gütemaß zu Kartendaten eines Kartenabschnitts der digitalen Karte zu erstellen,
- zu überprüfen, ob das Gütemaß für die Kartendaten des Kartenabschnitts unterhalb eines Schwellenwertes liegt, welches eine Mindestgüte definiert,
- eine Aufforderungsnachricht mit einer Aufforderung zum Übermitteln von Kartendaten an ein zweites Fahrzeug auszusenden, wenn das Gütemaß unterhalb des Schwellenwertes liegt, und
- eine von dem zweiten Fahrzeug ausgesandte Nachricht mit Kartendaten zu einem Kartenabschnitt zu empfangen und die empfangenen Kartendaten zu verarbeiten.

Vor dem Senden einer Aufforderungsnachricht mit einer Aufforderung zum Übermitteln von Kartendaten wird überprüft, ob zumindest ein zweites Fahrzeug in der Umgebung ist.

Das erfindungsgemäße System wird dadurch weitergebildet, dass das System eine Nachricht mit Kartendaten zu dem Kartenabschnitt um die Eigenposition sendet, wenn es eine Aufforderungsnachricht empfängt.

Weitere vorteilhafte Ausführungsformen des erfindungsgemäßen Systems ergeben sich in Kombination mit den Merkmalen der Ausführungsformen des erfindungsgemäßen Verfahrens, insbesondere hinsichtlich der Ermittlung des Gütemaßes sowie der Ausführungsformen zur Reaktion und Gestaltung der Nachricht mit Kartendaten.

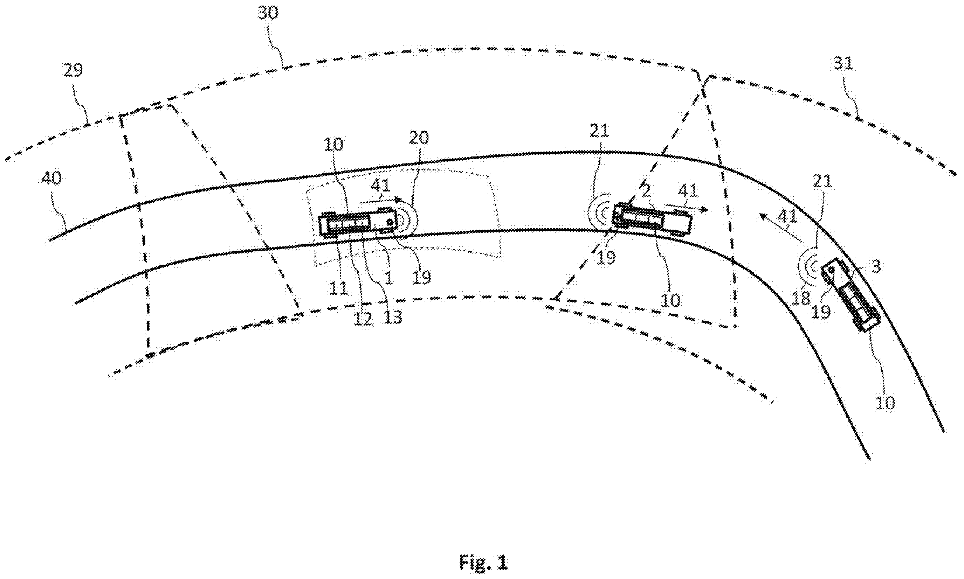

Die Erfindung wird nachfolgend anhand eines Ausführungsbeispiels und einer Figur näher beschrieben. Es zeigt
- Figur 1: ein Ausführungsbeispiel des erfindungsgemäßen Verfahrens und des erfindungsgemäßen Systems.

Figur 1 zeigt mehrere Fahrzeuge 1, 2, 3 auf einer Straße 40, die jeweils mit einem erfindungsgemäßen System 10 ausgestattet sind. Die Fahrtrichtung der Fahrzeuge 1, 2, 3 ist durch Pfeile 41 entsprechend dargestellt. Der Übersichtlichkeit halber wurden die Bezugszeichen zum System 10 nur am Fahrzeug 1 eingezeichnet. Die Bezugszeichen sind aber für die Fahrzeuge 2 und 3 mitzulesen.

Das System 10 zum Erstellen einer digitalen Karte für ein Fahrzeug weist eine Kommunikationseinheit 19 zum Austauschen von Nachrichten zwischen Fahrzeugen, eine Positionseinheit 11 zum Erfassen der Eigenposition des Fahrzeugs, und eine Karteneinheit 12 zum Speichern und Bearbeiten einer digitalen Karte auf. Ferner weist das System 10 eine Bewertungseinheit 13 zum Erstellen eines Gütemaßes zu einem Kartenabschnitt 30, 31 der digitalen Karte auf. Die Kommunikationseinheit 19 umfasst eine Antenne und eine Verarbeitungseinheit zum Verarbeiten der empfangenen und gesendeten Daten. Es ist denkbar dass diese Verarbeitungseinheit auch Funktionen der Karteneinheit und der Positionseinheit übernimmt. Eine Einheit ist im Sinne der Erfindung als eine funktionale Einheit zu verstehen.

Das Gütemaß kann nach einzelnen oder mehreren Kriterien bewertet werden.

Beispielsweise kann die Zeitspanne seit dem letzten Befahren des Kartenabschnitts 29, 30 verstrichen ist herangezogen werden, um ein Gütemaß zu ermitteln. Es können Klassen von Gütemaßen, z. B. A, B, C, definiert werden, die dann mit Zeitspannen, z. B. 1 Monat, 6 Monate, etc., verknüpft werden. Stellt das Fahrzeug 1 fest, dass die Zeit seit der letzten Fahrt in dem Kartenabschnitt 30 schon 6 Monate her ist und diese mit einem niedrigen Gütemaß unterhalb einer Schwelle liegt, so schickt es eine Aufforderungsnachricht 19 ab.

Ferner kann für das Gütemaß berücksichtigt werden, wie oft Fahrten innerhalb des Kartenabschnitts durchgeführt wurden. Auch hier können bestimmte Güteklassen mit bestimmten Schwellenwerten für die Anzahl der Durchfahrten, bspw. 10, 30, 50, verknüpft werden. Alternativ kann auch ein Wert zwischen 0 und 1 gewählt werden, wobei der Maximalwert 1 bei Erreichen einer bestimmten Anzahl von Durchfahrten erreicht ist. Verknüpft man nun dieses Kriterium mit dem vorstehenden Kriterium betreffend die zurückliegende Zeitspanne der letzten Zeitspanne, so kann die neben der Redundanz der Kartendaten auch die Aktualität der Kartendaten berücksichtigt werden.

Des Weiteren kann zum Erstellen des Gütemaßes berücksichtigt werden, von wie vielen anderen Fahrzeugen 2, 3, bereits Nachrichten mit Kartendaten empfangen wurden, die zueinander plausibel sind.

Außerdem kann zum Erstellen des Gütemaßes eine gewichtete Standardabweichung zwischen den empfangenen Kartendaten 21 für die jeweiligen Kartenabschnitte 29, 30, 31 berücksichtigt werden.

Sinnvoller Weise wird das Gütemaß für die befahrenen, befahrenden oder in naher Zukunft zu befahrenden Kartenabschnitte 29, 30, 31 ermittelt und überprüft. Alternativ ist es aber auch möglich bei vorhandener Rechenkapazität die digitale Karte grundsätzlich auf ihre Gütemaße hin zu überprüfen und solche Kartenabschnitte sich vorzumerken, wo das Gütemaß unterhalb des Schwellenwertes liegt. Eine Aufforderungsnachricht kann dann abgeschickt werden, wenn eine Wahrscheinlichkeit, dass Fahrzeuge in der Umgebung - insbesondere im Sende- und/oder Empfangsbereich der Kommunikationseinheit 19 - sind, die benötigten Kartendaten haben, erkannt wird, bspw. anhand der Anzahl der Fahrzeuge in der Umgebung, typischer Routen von Fahrzeugen, etc. Zur Bestimmung, ob ein Fahrzeug in der Umgebung ist, können beispielsweise Informationen aus Umfeldsensoren und/oder empfangene V2X-Botschaften herangezogen werden. Um Bandbreite der Übertragungsstrecke einzusparen, kann somit vorgesehen sein, dass seitens des ersten Fahrzeugs geprüft wird, ob überhaupt ein weiteres Fahrzeug in der Umgebung ist, um im Falle des nicht Vorhandenseins eines weiteren Fahrzeugs auf ein Aussenden der Aufforderungsnachricht verzichten zu können.

Der Austausch der Kartendaten läuft nach folgenden Schritten ab:
In einem ersten Schritt erstellt das erste Fahrzeug 1 ein Gütemaß zu Kartendaten eines Kartenabschnitts 30, 31 der digitalen Karte. Das Gütemaß kann sich auf Kartendaten des Kartenabschnitts 30 beziehen, in der sich das erste Fahrzeug gerade befindet. Darüber hinaus können Gütemaße zu Kartendaten erstellt werden, die in anderen Kartenabschnitten liegen, z. B. in einem zukünftig zu befahrenden Kartenabschnitt 31. Genauso ist es denkbar das Gütemaß für einen zurückliegenden Kartenabschnitt zu ermitteln.

Im zweiten Schritt überprüft das erste Fahrzeug, ob das Gütemaß für die Kartendaten des Kartenabschnitts unterhalb eines Schwellenwertes liegt, welches eine Mindestgüte bzw. -qualität definiert. Hierfür kann wiederum die Gesamtheit der Gütemaße für einen Kartenabschnitt oder Gütemaße für einzelne Kartendatentypen eines Kartenabschnitts 29, 30, 31 herangezogen werden.

Im dritten Schritt sendet das erste Fahrzeug eine Aufforderungsnachricht 20 mit einer Aufforderung zum Übermitteln von Kartendaten, wenn das Gütemaß für die Kartendaten des jeweils betrachteten Kartenabschnitts 29, 30, 31 unterhalb des Schwellenwertes liegt. Vor dem Senden der Aufforderungsnachricht wird überprüft, ob zumindest ein weiteres Fahrzeug in der Umgebung ist.

Im vierten Schritt wird diese Aufforderungsnachricht 30 von den anderen Fahrzeugen 2, 3 empfangen.

Im fünften Schritt senden die anderen Fahrzeuge 2, 3 eine Nachricht mit Kartendaten 21 zu einem Kartenabschnitt 30, 31 aus. Die Nachrichten 21 mit den Kartendaten werden vorzugsweise als MAP Nachrichten bzw. Botschaften versendet. Die Gestaltung der Nachrichten kann je nach Situation unterschiedlich gestaltet werden, wie hiernach noch beschrieben. Die Nachricht 21 des zweiten Fahrzeugs 2 wird durch das erste Fahrzeug 1 aber auch durch das dritte Fahrzeug 3 empfangen. Ebenso wird die Nachricht des dritten Fahrzeugs 3 durch das erste Fahrzeug 1 und das zweite Fahrzeug 2.

Im sechsten Schritt werden die empfangenen Nachrichten mit Kartendaten durch das erste Fahrzeug verarbeitet und ggf. in die eigene digitale Karte integriert.

In einem einfachen Fall, wo nur das erste und zweite Fahrzeug sich in einer für die Kommunikation ausreichenden Distanz sich befinden, versendet das zweite Fahrzeug 2 vorteilhafterweise eine Nachricht 21 mit Kartendaten, die alle vorhandenen Kartendaten zu dem jeweiligen Kartenabschnitt 29, 30, 31 enthält.

Diese kann zum einen den Kartenabschnitt 30 betreffen, in der sich das zweite Fahrzeug selbst befindet und der in diesem Beispiel sich mit dem Kartenabschnitt überschneidet, in der sich das anfragende erste Fahrzeug 1 befindet. Alternativ können auch Kartendaten zu mehreren Kartenabschnitten 29, 30, 31 versendet werden.

Des weiteren kann das System derart konfiguriert sein, dass das zweite und dritte Fahrzeug 2, 3 Nachrichten 21 mit Kartendaten versenden, die nur Kartendaten enthält, für die das zweite und dritte Fahrzeug 2, 3 ein Gütemaß oberhalb des Schwellenwertes ermittelt hat. Auf diese Weise erhält das erste Fahrzeug 1 nur Kartendaten die qualitativ gut sind und sich ggf. auch gegenseitig bestätigen.

Je nachdem, wie groß der Zeitversatz zwischen dem Versenden der Nachrichten mit den Kartendaten zwischen dem zweiten und dritten Fahrzeug 2, 3 ist, kann das zweite oder dritte Fahrzeug 2, 3 vor Versenden einer Nachricht mit Kartendaten überprüfen, ob bereits von einem anderen Fahrzeug 2, 3 eine vergleichbare Nachricht geschickt wurde. Diese wird dann untersucht, um doppelte Daten oder Informationen nicht zu schicken. Zwar kann das jeweilige Fahrzeug daraufhin trotzdem eine eigene Nachricht mit Kartendaten aussenden. Es ist jedoch nur eine Option. Eine weitere Option ist es, dass das jeweilige Fahrzeug 2, 3 eine Nachricht mit Kartendaten aussendet, die in den bereits von anderen Fahrzeugen ausgesendeten Kartendaten nicht enthalten sind. Die Kartendaten ergänzen sich somit gegenseitig. Ergänzend oder alternativ dazu kann das jeweilige Fahrzeug 2, 3 eine Nachricht 21 mit Kartendaten aussenden, die sich von den bereits von anderen Fahrzeugen ausgesendeten Kartendaten unterscheiden bzw. davon abweichen. Das empfangende erste Fahrzeug 1 muss in diesem Fall eine Auswertung der empfangenen Kartendaten durchführen. Ferner ist es aber auch möglich, dass das jeweilige Fahrzeug 2, 3 keine Nachricht mit Kartendaten versendet, um bspw. unnötige Verwendung der Datenkanäle bzw. der Kommunikationsbandbreite zu vermeiden.

Hierzu ist es vorteilhaft das Verfahren und das System derart anzupassen, dass das Versenden einer Aufforderungsnachricht ausgesetzt wird, wenn die Kommunikationsbandbreite der Kommunikationseinheit eine vordefinierte Auslastungsgrenze überschritten hat, oder wenn die Kommunikationsbandbreite der Kommunikationseinheit eine vordefinierte Auslastungsgrenze überschritten hat.

## Patentansprüche

1. Verfahren zum Austauschen von digitalen Kartendaten zwischen einem ersten und einem zweiten Fahrzeug (1,2,3), wobei das erste und das zweite Fahrzeug (1,2,3) jeweils eine Kommunikationseinheit (19) zum Austauschen von Nachrichten zwischen Fahrzeugen, eine Positionseinheit (11) zumErfassen der Eigenposition des Fahrzeugs, eine Karteneinheit (12) zum Speichern und Bearbeiten einer digitalen Karte, und eine Bewertungseinheit (13) zum Erstellen eines Gütemaßes zu einem Kartenabschnitt (29,30,31) der digitalen Karte umfasst, aufweisend die Schritte:
- Erstellen eines Gütemaßes zu Kartendaten eines Kartenabschnitts (29,30,31) der digitalen Karte durch das erste Fahrzeug,
- Überprüfen, ob das Gütemaß für die Kartendaten des Kartenabschnitts (29,30,31) unterhalb eines Schwellenwertes liegt, welches eine Mindestgüte definiert,
- Senden einer Aufforderungsnachricht (20) mit einer Aufforderung zum Übermitteln von Kartendaten, wenn das Gütemaß unterhalb des Schwellenwertes liegt,
- Empfangen dieser Botschaft mittels eines zweiten Fahrzeugs,
- Senden einer Nachricht (21) mit Kartendaten zu einem Kartenabschnitt durch das zweite Fahrzeug, und
- Empfangen der Nachricht (21) mit Kartendaten durch das erste Fahrzeug und Verarbeiten der empfangenen Kartendaten durch das erste Fahrzeug, **dadurch gekennzeichnet dass**,
vor dem Senden einer Aufforderungsnachricht (20) mit einer Aufforderung zum Übermitteln von Kartendaten, wenn das Gütemaß unterhalb des Schwellenwertes liegt, überprüft wird, ob zumindest ein weiteres Fahrzeug in der Umgebung ist.

2. Verfahren nach Anspruch 1, wobei zum Erstellen des Gütemaßes berücksichtigt wird, welche Zeitspanne seit dem letzten Befahren des Kartenabschnitts verstrichen ist.

3. Verfahren nach einem der vorstehenden Ansprüche, wobei zum Erstellen des Gütemaßes berücksichtigt wird, wie oft Fahrten innerhalb des Kartenabschnitts durchgeführt wurden.

4. Verfahren nach einem der vorstehenden Ansprüche, wobei zum Erstellen des Gütemaßes berücksichtigt wird, von wie vielen anderen Fahrzeugen bereits Nachrichten mit Kartendaten empfangen wurden, die zueinander plausibel sind.

5. Verfahren nach einem der vorstehenden Ansprüche, wobei zum Erstellen des Gütemaßes eine gewichtete Standardabweichung zwischen den empfangenen Kartendaten für diesen Kartenabschnitt berücksichtigt wird.

6. Verfahren nach einem der vorstehenden Ansprüche, wobei die
Nachricht mit Kartendaten eine MAP Nachricht ist, wobei eine MAP Nachricht vordefinierte Strukturen enthält, wobei die Kartendaten in den vordefinierten Strukturen enthalten sind, und wobei die Strukturen dazu ausgebildet sind, eine Analyse und Verarbeitung der Kartendaten zu vereinfachen.

7. Verfahren nach einem der vorstehenden Ansprüche, wobei die Nachricht mit Kartendaten alle im zweiten Fahrzeug vorhandenen Kartendaten zu einem Kartenabschnitt enthält.

8. Verfahren nach einem der Ansprüche 1 bis 6, wobei die
Nachricht mit Kartendaten nur Kartendaten enthält, für die das zweite Fahrzeug ein Gütemaß oberhalb des Schwellenwertes ermittelt hat.

9. Verfahren nach einem der vorstehenden Ansprüche, wobei das zweite Fahrzeug vor Versenden einer Nachricht mit Kartendaten überprüft, ob bereits von einem anderen Fahrzeug eine vergleichbare Nachricht geschickt wurde.

10. Verfahren nach Anspruch 9, wobei das zweite Fahrzeug eine eigene Nachricht mit Kartendaten aussendet.

11. Verfahren nach Anspruch 9, wobei das zweite Fahrzeug eine Nachricht mit Kartendaten aussendet, die in den bereits von anderen Fahrzeugen ausgesendeten Kartendaten nicht enthalten sind.

12. Verfahren nach einem der Ansprüche 9 oder 11, wobei das zweite Fahrzeug eine Nachricht mit Kartendaten aussendet, die sich von den bereits von anderen Fahrzeugen ausgesendeten Kartendaten unterscheiden.

13. Verfahren nach einem der vorstehenden Ansprüche, wobei das Versenden einer Aufforderungsnachricht ausgesetzt wird, wenn die Kommunikationsbandbreite der Kommunikationseinheit eine vordefinierte Auslastungsgrenze überschritten hat.

14. Verfahren nach einem der vorstehenden Ansprüche, wobei eine Nachricht mit Kartendaten nicht versendet wird, wenn die Kommunikationsbandbreite der Kommunikationseinheit eine vordefinierte Auslastungsgrenze überschritten hat.

15. System zum Erstellen einer digitalen Karte, wobei das System zur Verwendung in einem Fahrzeug (1, 2, 3) ausgestaltet ist, aufweisend
- eine Kommunikationseinheit (19) zum Austauschen von Nachrichten zwischen Fahrzeugen,
- eine Positionseinheit (11) zum Erfassen der Eigenposition des Fahrzeugs,
- eine Karteneinheit (12) zum Speichern und Bearbeiten einer digitalen Karte,
- eine Bewertungseinheit (13) zum Erstellen eines Gütemaßes zu einem Kartenabschnitt (29,30,31) der digitalen Karte, wobei das System (10) ausgestaltet ist
- ein Gütemaß zu Kartendaten eines Kartenabschnitts (29,30,31) der digitalen Karte zu erstellen,
- zu überprüfen, ob das Gütemaß für die Kartendaten des Kartenabschnitts (29,30,31) unterhalb eines Schwellenwertes liegt, welches eine Mindestgüte definiert,
- eine Aufforderungsnachricht (20) mit einer Aufforderung zum Übermitteln von Kartendaten an ein zweites Fahrzeug auszusenden, wenn das Gütemaß unterhalb des Schwellenwertes liegt, und
- eine von dem zweiten Fahrzeug ausgesandte Nachricht (21) mit Kartendaten zu einem Kartenabschnitt zu empfangen und die empfangenen Kartendaten zu verarbeiten, **dadurch gekennzeichnet, dass**
vor dem Senden einer Aufforderungsnachricht (20) mit einer Aufforderung zum Übermitteln von Kartendaten überprüft wird, ob zumindest ein zweites Fahrzeug in der Umgebung ist.

## Claims

1. Method for exchanging digital map data between a first and a second vehicle (1, 2, 3), wherein the first and the second vehicle (1, 2, 3) each comprise a communication unit (19) for exchanging messages between vehicles, a positioning unit (11) for detecting the vehicle's own position, a map unit (12) for storing and processing a digital map, and an evaluation unit (13) for creating a quality measurement regarding a map section (29, 30, 31) of the digital map, comprising the following steps:
- creating a quality measurement regarding map data of a map section (29, 30, 31) of the digital map by way of the first vehicle,
- checking whether the quality measurement for the map data of the map section (29, 30, 31) is below a threshold value which defines a minimum quality,
- transmitting a request message (20) containing a request for the transmission of map data if the quality measurement is below the threshold value,
- receiving said message by means of a second vehicle,
- transmitting a message (21) containing map data regarding a map section by way of the second vehicle, and
- receiving the message (21) containing map data by way of the first vehicle and processing the received map data by way of the first vehicle, **characterized in that**, prior to transmitting a request message (20) containing a request for the transmission of map data, if the quality is below the threshold value, a check is carried out to determine whether at least one other vehicle is in the surroundings.

2. Method according to Claim 1, wherein creating the quality measurement includes taking into account the period of time that has elapsed since the last time the map section was driven through.

3. Method according to either of the preceding claims, wherein creating the quality measurement includes taking into account how often journeys within the map section have been made.

4. Method according to any one of the preceding claims, wherein creating the quality measurement includes taking into account from how many other vehicles messages containing map data, which are plausible with respect to one another, have already been received.

5. Method according to any one of the preceding claims, wherein creating the quality measurement includes taking into account a weighted standard deviation between the received map data for said map section.

6. Method according to any one of the preceding claims, wherein the message containing map data is a MAP message, wherein a MAP message contains predefined structures, wherein the map data is contained in the predefined structures, and wherein the structures are designed to simplify analysis and processing of the map data.

7. Method according to any one of the preceding claims, wherein the message containing map data contains all of the map data regarding a map section which are present in the second vehicle.

8. Method according to any one of Claims 1 to 6, wherein the message containing map data only contains map data for which the second vehicle has determined a quality above the threshold value.

9. Method according to any one of the preceding claims, wherein, prior to transmitting a message containing map data, the second vehicle checks whether a comparable message has already been dispatched by another vehicle.

10. Method according to Claim 9, wherein the second vehicle sends a separate message containing map data.

11. Method according to Claim 9, wherein the second vehicle sends a message containing map data which are not contained in the map data already sent by other vehicles.

12. Method according to either one of Claims 9 and 11, wherein the second vehicle sends a message containing map data which differ from the map data already sent by other vehicles.

13. Method according to any one of the preceding claims, wherein the transmission of a request message is suspended if the communication bandwidth of the communication unit has exceeded a predefined full capacity limit.

14. Method according to any one of the preceding claims, wherein a message containing map data is not sent if the communication bandwidth of the communication unit has exceeded a predefined full capacity limit.

15. System for creating a digital map, wherein the system is designed to be used in a vehicle (1, 2, 3), comprising:
- a communication unit (19) for exchanging messages between vehicles,
- a positioning unit (11) for detecting the vehicle's own position,
- a map unit (12) for storing and processing a digital map,
- an evaluation unit (13) for creating a quality measurement regarding a map section (29, 30, 31) of the digital map, wherein the system (10) is designed to
- create a quality measurement regarding map data of a map section (29, 30, 31) of the digital map,
- check whether the quality measurement for the map data of the map section (29, 30, 31) is below a threshold value which defines a minimum quality,
- transmit a request message (20) containing a request for the transmission of map data to a second vehicle if the quality measurement is below the threshold value, and
- receive a message (21) containing map data regarding a map section sent by the second vehicle and process the received map data,
**characterized in that**, prior to transmitting a request message (20) containing a request for the transmission of map data, a check is carried out to determine whether at least one second vehicle is in the surroundings.

## Revendications

1. Procédé d'échange de données cartographiques numériques entre un premier et un deuxième véhicule (1, 2, 3), le premier et le deuxième véhicule (1, 2, 3) comprenant respectivement une unité de communication (19) destinée à échanger des messages entre les véhicules, une unité de position (11) destinée à détecter la position propre du véhicule, une unité cartographique (12) destinée à stocker et à éditer une carte numérique, et une unité d'évaluation (13) destinée à établir une mesure de qualité à propos d'une portion de carte (29, 30, 31) de la carte numérique, comprenant les étapes suivantes :
- établissement, par le premier véhicule, d'une mesure de qualité à propos des données cartographiques d'une portion de carte (29, 30, 31) de la carte numérique,
- vérification si la mesure de qualité pour les données cartographiques de la portion de carte (29, 30, 31) est inférieure à une valeur de seuil, laquelle définit une qualité minimale,
- envoi d'un message d'invitation (20) comprenant une invitation à communiquer des données cartographiques lorsque la mesure de qualité est inférieure à la valeur de seuil,
- réception de ce message au moyen d'un deuxième véhicule,
- envoi d'un message (21) comprenant des données cartographiques relatives à une portion de carte par le deuxième véhicule, et
- réception du message (21) comprenant des données cartographiques par le premier véhicule et traitement des données cartographiques reçues par le premier véhicule, **caractérisé en ce que**, avant l'envoi d'un message d'invitation (20) comprenant une invitation à communiquer des données cartographiques lorsque la mesure de qualité est inférieure à la valeur de seuil, un contrôle est effectué afin de vérifier si au moins un véhicule supplémentaire se trouve aux environs.

2. Procédé selon la revendication 1, le laps de temps qui s'est écoulé depuis le dernier passage dans la portion de carte étant pris en compte pour établir la mesure de qualité.

3. Procédé selon l'une des revendications précédentes, la fréquence des trajets à l'intérieur de la portion de carte étant prise en compte pour établir la mesure de qualité.

4. Procédé selon l'une des revendications précédentes, le nombre d'autres véhicules dont des messages contenant des données cartographiques ont déjà été reçus et qui sont plausibles les uns par rapport aux autres étant pris en compte pour établir la mesure de qualité.

5. Procédé selon l'une des revendications précédentes, un écart-type pondéré entre les données cartographiques reçues pour cette portion de carte étant pris en compte pour établir la mesure de qualité.

6. Procédé selon l'une des revendications précédentes, le message comprenant des données cartographiques étant un message MAP, un message MAP contenant des structures prédéfinies, les données cartographiques étant contenues dans les structures prédéfinies, et les structures étant configurées pour simplifier une analyse et un traitement des données cartographiques.

7. Procédé selon l'une des revendications précédentes, le message qui comprend des données cartographiques contenant toutes les données cartographiques présentes dans le deuxième véhicule à propos d'une portion de carte.

8. Procédé selon l'une des revendications 1 à 6, le message qui comprend des données cartographiques ne contenant que des données cartographiques pour lesquelles le deuxième véhicule a déterminé une mesure de qualité supérieure à la valeur de seuil.

9. Procédé selon l'une des revendications précédentes, le deuxième véhicule vérifiant, avant d'envoyer un message qui comprend des données cartographiques, si un message comparable a déjà été envoyé par un autre véhicule.

10. Procédé selon la revendication 9, le deuxième véhicule envoyant un message propre qui comprend des données cartographiques.

11. Procédé selon la revendication 9, le deuxième véhicule envoyant un message qui comprend des données cartographiques qui ne sont pas incluses dans les données cartographiques déjà émises par d'autres véhicules.

12. Procédé selon l'une des revendications 9 ou 11, le deuxième véhicule envoyant un message qui comprend des données cartographiques qui sont différentes des données cartographiques déjà émises par d'autres véhicules.

13. Procédé selon l'une des revendications précédentes, l'envoi d'un message d'invitation étant suspendu lorsque la largeur de bande de communication de l'unité de communication a dépassé une limite de charge prédéfinie.

14. Procédé selon l'une des revendications précédentes, un message qui comprend des données cartographiques n'étant pas envoyé lorsque la largeur de bande de communication de l'unité de communication a dépassé une limite de charge prédéfinie.

15. Système de création d'une carte numérique, le système étant configuré pour être utilisé dans un véhicule (1, 2, 3), comprenant
- une unité de communication (19) destinée à l'échange de messages entre véhicules,
- une unité de position (11) destinée à détecter la position propre du véhicule,
- une unité de cartographie (12) destinée à enregistrer et à éditer une carte numérique,
- une unité d'évaluation (13) destinée à établir une mesure de qualité pour une portion de carte (29, 30, 31) de la carte numérique, le système (10) étant configuré pour
- établir une mesure de qualité à propos des données cartographiques d'une portion de carte (29, 30, 31) de la carte numérique,
- vérifier si la mesure de qualité pour les données cartographiques de la portion de carte (29, 30, 31) est inférieure à une valeur de seuil, laquelle définit une qualité minimale,
- envoyer un message d'invitation (20) comprenant une invitation à communiquer des données cartographiques à un deuxième véhicule lorsque le niveau de qualité est inférieur à la valeur seuil, et
- recevoir un message (21) envoyé par le deuxième véhicule comprenant des données cartographiques relatives à une portion de carte, et traiter les données cartographiques reçues,
**caractérisé en ce que**, avant l'envoi d'un message d'invitation (20) comprenant une invitation à communiquer des données cartographiques, un contrôle est effectué afin de vérifier si au moins un deuxième véhicule se trouve aux environs.
